# EUROPEAN PATENT SPECIFICATION

(11) **EP 2 662 209 B1**
(45) Date of publication and mention of the grant of the patent: **29.04.2015**
(21) Application number: 13158764.4
(22) Date of filing: 12.03.2013
(51) Int. Cl.: B32B 15/09, B32B 27/10, B32B 27/32, B32B 27/36, B44C 1/14, B44C 1/17

(54) **Decorative film and relevant manufacturing method**
Dekorfolie und zugehöriges Herstellungsverfahren
Film décoratif et procédé de fabrication pertinent

(30) Priority: 19.03.2012 IT FI20120058
(43) Date of publication of application: 13.11.2013
(73) Proprietor: Giusto Manetti Battiloro S.p.A., 50144 Firenze (IT)
(72) Inventor: Manetti, Bernardo, 50141 Calenzano FI (IT)
(74) Representative: Concone, Emanuele

(56) References cited:
- EP-B1- 1 268 221
- WO-A1-91/19608
- GB-A- 1 196 801
- US-A- 4 927 572
- US-A- 5 876 818

## Description

The present invention relates to decorative films for the finishing of panels and profiles in wood, MDF, plastic and metal used in the fields of furniture components (furniture, floors, walls, exhibition stands, etc.) and fancy goods (luxury packagings, boxes, cases, etc.).

It is known that these decorative films are formed by a laminate of various layers that are sufficiently thin and flexible as to allow its application also to shaped pieces by means of a hot setting glue of different kinds (vinyl glue, EWA, polyurethane glue), so as to quickly obtain a decorative surface finish.

A prior art decorative film is described in EP 1268221 and schematically illustrated in Fig.1 (the thicknesses of the various layers of the laminate are not to scale for the sake of clarity of the drawing). In practice, a conventional film consists of a paper substrate C on which, by means of an adhesive layer A, there is hot calendered a metal layer M that acts as base for printing a decorative layer D, usually pre-printed on layer M prior to the application to substrate C, which is finally protected by a transparent polyester layer T.

This known structure of the decorative film has various drawbacks, both in manufacturing and in use. In the first place, the adhesive layer A can be insufficient to prevent the delamination from the paper substrate C of the laminated semi-finished product made up of layers M and D (and possibly provided also with the protective layer T).

Secondarily, when the film is applied to wooden or MDF pieces it can suffer from the attack of moisture that penetrates the finished material (wood or MDF) through small cracks that may remain after the finishing treatment. This moisture, once penetrated into the material, tends to surface and may come out on the side where the film is applied climbing through substrate C and adhesive A up to the metal layer M, interacting therewith and causing the partial oxidation thereof which shows up with the appearance of dots and spots visible to the naked eye.

Still another drawback stems from the fact that the transparent polyester layer T is applied on top of the decorative layer D which implies that the surface gloss of the film depends on the transparency and brightness of the polyester employed. Moreover, the subsequent surface treatments only allow a possible matting of the film but not an increase in gloss. Finally, despite its basic significant resistance, polyester can be subjected to mechanical scratching actions that may occur during manufacturing, transport and/or handling.

GB 1196801 describes a flexible decorative laminate in which the substrate contains an amount of thermo-setting resin greater than the surface decorative layer included in the laminated semi-finished product, and in order to create a barrier to the migration of resin from the substrate which can damage the decorative layer there is provided a polyethylene layer arranged on top of the substrate or at the bottom of the laminated semi-finished product prior to the hot calendering. Although such an arrangement is helpful in overcoming the first two above-mentioned drawbacks, it obviously has no effect on the other drawbacks concerning the polyester layer that is absent in the laminate disclosed in said document.

Therefore the object of the present invention is to provide a decorative film that overcomes all of the above-mentioned drawbacks. This object is achieved by means of a film that is not only provided with a polyethylene layer arranged between the adhesive layer and the semi-finished product that is applied to the paper substrate, but in which said semi-finished product is also made such that the polyester layer is under the decorative layer, preferably also under the metal layer.

A first important advantage of the film according to the present invention resides in the fact that placing the decorative layer above the polyester layer makes it possible to achieve a great aesthetical improvement as to the definition of the decoration and a greater flexibility in providing a given level of surface gloss/matt through a suitable selection of the final protective layer (which can even be absent for a subsequent customization with typographic inks by the user). In this way, the product finished with the present decorative film can be more easily adapted in terms of gloss/matt to the specific use for which it is intended, for example by adapting it to the other pieces of furniture to which it is combined.

Furthermore, the application of a final protective layer consisting of an acrylic paint cured by UV radiation allows to achieve an anti-scratch painting that makes the present film more protected against mechanical scratching actions with respect to the prior art film protected by the polyester layer.

Another significant advantage of this film, in its preferred embodiment, is that of better preventing the oxidation of the metal layer thanks not only to the polyethylene layer, which upon application melts and mixes with the adhesive layer forming a single final layer impermeable to moisture, but also to the presence of the polyester layer under the metal layer which further increases the degree of protection against oxidation in that the polyester layer acts as a further barrier after the polyethylene layer.

These and other advantages and characteristics of the decorative film according to the present invention will be clear to those skilled in the art from the following detailed description of some embodiments thereof, with reference to the annexed drawings wherein:
Fig.1 is a diagrammatic sectional view of a prior art film, as described in the introductory portion; and
Fig.2 is a diagrammatic sectional view of the preferred embodiment of the film according to the present invention.

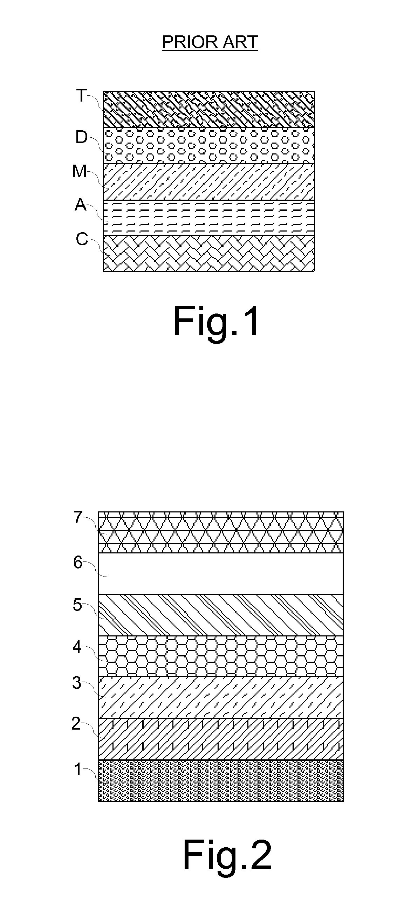

With reference to Fig.2, there is seen that the present film conventionally includes a paper substrate 1 on which there is applied an adhesive layer 2 for the hot calendering of a laminated semi-finished product comprising a polyester layer 4 and a decorative layer 6.

As previously mentioned, a first novel aspect of the film according to the present invention resides in the presence of a polyethylene layer 3 (indicative thickness 20 µm) arranged between the adhesive layer 2 and the semi-finished product applied to the paper substrate 1.

A second novel aspect of this film is provided by the structure of the semi-finished product in which the polyester layer 4 (indicative thickness 23 µm) is used as a base for the application of a metal layer 5 on which the decorative layer 6 is applied in turn. In this way, as explained above, the polyester layer 4 is located below both layers 5 and 6 thus allowing to easily manage the surface gloss of the film and cooperating with the polyethylene layer 3 in protecting the metal layer 5 against oxidation.

Finally, a third novel aspect of the present film resides in the presence of the final protective layer 7 of acrylic paint cured by UV radiation, which is applied when the film is intended as a finished product that need not undergo further workings (apart the application to the piece to be decorated).

It should be noted that the metal layer 5 can be obtained by metallization of the polyester layer 4, it can be a separate layer (e.g. aluminium) or it can be absent altogether in the semi-finished product. Moreover, when present, it can even be arranged in contact with the polyethylene layer 3, i.e. layers 4 and 5 can swap their positions and the base of the semi-finished product consists in that case of the metal layer 5 rather than the polyester layer 4 (in any case the decorative layer 6 remains above the polyester layer 4).

In the light of the description above, the method for manufacturing the decorative film according to the present invention is readily understood.

In a first step, starting from reels of possibly metallized polyester (the metallization is usually carried out in a preliminary step), the decorations of the decorative layer are first rotogravure printed thereon and then the possible protective painting surface treatment is carried out with an acrylic paint that can be cured by UV radiation.

The semi-finished product thus obtained is then sent to the subsequent step of coupling by hot calendering with the paper substrate on which the adhesive and the polyethylene have been previously applied. This calendering operation, through the use of heat, causes the activation of the adhesive and the melting of the polyethylene layer that mixes with the adhesive and secures the paper substrate to the semi-finished product. At the end of the line the product is then reeled back and marketed as such or cut to measure according to the specific needs of the client.

It is clear that the above-described and illustrated embodiments of the decorative film according to the invention are just examples susceptible of various modifications. In particular, the thicknesses of the various layers can change according to specific manufacturing needs and also the film manufacturing method can vary depending on the number and arrangement of the layers.

For example, as previously mentioned, the preparation of the semi-finished product may also include the lamination of a separate metal layer and/or not include the application of the protective paint. Similarly, the polyethylene layer can be laminated together with the other components of the semi-finished product, thus acting as base of the semi-finished product, rather than being applied on the paper substrate provided with the adhesive.

## Claims

1. Decorative film comprising a paper substrate (1) on which there is secured, by means of an adhesive layer (2), a laminated semi-finished product comprising a polyester layer (4) and a decorative layer (6), a polyethylene layer (3) being arranged between said adhesive layer (2) and said laminated semi-finished product secured to said paper substrate (1), **characterized in that** in the semi-finished product the polyester layer (4) is below the decorative layer (6).

2. Decorative film according to claim 1, **characterized in that** the semi-finished product further comprises a metal layer (5) that is below the decorative layer (6).

3. Decorative film according to claim 2, **characterized in that** said metal layer (5) is above the polyester layer (4).

4. Decorative film according to any of the preceding claims, **characterized in that** it further comprises a final protective layer (7) of acrylic paint cured by UV radiation.

5. Decorative film according to any of the preceding claims, **characterized in that** the polyethylene layer (3) has an indicative thickness of 20 µm

6. Method for manufacturing a decorative film according to any of the preceding claims, comprising the steps of:
a) providing a laminated semi-finished product comprising a polyester layer (4) and a decorative layer (6);
b) providing a paper substrate (1) provided with an adhesive layer (2);
c) providing a polyethylene layer (3) between the paper substrate (1) and the semi-finished product prior to their coupling;
d) coupling said laminated semi-finished product to said paper substrate (1) by hot calendering;
**characterized in that** in step a) the polyester layer (4) is arranged below the decorative layer (6).

7. Method for manufacturing a decorative film according to claim 6, **characterized in that** step a) further includes providing a metal layer (5) that is arranged below the decorative layer (6).

8. Method for manufacturing a decorative film according to claim 7, **characterized in that** said metal layer (5) is arranged above the polyester layer (4).

9. Method for manufacturing a decorative film according to claim 8, **characterized in that** the metal layer (5) is provided through metallization of the polyester layer (4) in a preliminary step that precedes step a).

10. Method for manufacturing a decorative film according to any of claims 6 to 9, **characterized in that** it further includes a step a') of providing on the semi-finished product a final protective layer (7) of acrylic paint cured by UV radiation.

## Patentansprüche

1. Dekorfolie, umfassend ein Papiersubstrat (1), worauf mittels einer Klebstoffschicht (2) ein laminiertes, halbfertiges Produkt fixiert ist, umfassend eine Polyesterschicht (4) und eine Dekorschicht (6), wobei eine Polyethylenschicht (3) zwischen der besagten Klebstoffschicht (2) und dem besagten, auf dem Papiersubstrat fixierten, laminierten, halbfertigen Produkt (1) angeordnet ist, **dadurch gekennzeichnet, dass** sich in dem halbfertigen Produkt die Polyesterschicht (4) unterhalb der Dekorschicht (6) befindet.

2. Dekorfolie gemäß Anspruch 1, **dadurch gekennzeichnet, dass** das halbfertige Produkt ferner eine Metallschicht (5) aufweist, welche sich unterhalb der Dekorschicht (6) befindet.

3. Dekorfolie gemäß Anspruch 2, **dadurch gekennzeichnet, dass** die Metallschicht (5) sich oberhalb der Polyesterschicht (4) befindet.

4. Dekorfolie gemäß einem der vorhergehenden Ansprüche, **dadurch gekennzeichnet, dass** sie ferner eine abschließende Schutzschicht (7) aus einer Acrylfarbe aufweist, die unter UV-Strahlung ausgehärtet ist.

5. Dekorfolie gemäß einem der vorhergehenden Ansprüche, **dadurch gekennzeichnet, dass** die Polyethylenschicht eine charakteristische Dicke von 20 µm aufweist.

6. Verfahren zur Herstellung einer Dekorfolie gemäß einem der vorhergehenden Ansprüche, umfassend die folgenden Schritte:
a) Bereitstellen eines laminierten halbfertigen Produkts mit einer Polyesterschicht (4) und einer Dekorschicht (6);
b) Bereitstellen eines mit einer Klebstoffschicht (2) versehenen Papiersubstrats (1);
c) Bereitstellen einer Polyethylenschicht (3) zwischen dem Papiersubstrat (1) und dem halbfertigen Produkt vor deren Verbindung;
d) Verbinden des besagten halbfertigen Produkts mit dem besagten Papiersubstrat (1) durch Heißkalandrierung;
**dadurch gekennzeichnet, dass** im Schritt a) die Polyesterschicht (4) unterhalb der Dekorschicht (6) angeordnet ist.

7. Verfahren zur Herstellung einer Dekorfolie gemäß Anspruch 6, **dadurch gekennzeichnet, dass** der Schritt a) ferner das Bereitstellen einer Metallschicht (5) umfasst, die unterhalb der Dekorschicht (6) angeordnet ist.

8. Verfahren zur Herstellung einer Dekorfolie gemäß Anspruch 7, **dadurch gekennzeichnet, dass** die besagte Metallschicht (5) oberhalb der Polyesterschicht (4) angeordnet ist.

9. Verfahren zur Herstellung einer Dekorfolie gemäß Anspruch 8, **dadurch gekennzeichnet, dass** die Metallschicht (5) bereitgestellt wird durch Metallisierung der Polyesterschicht (4) in einem vorherigen Schritt, welcher dem Schritt a) vorausgeht.

10. Verfahren zur Herstellung einer Dekorfolie gemäß einem der Ansprüche 6 bis 9, **dadurch gekennzeichnet, dass** sie weiterhin als Schritt a') das Bereitstellen einer abschließenden Schutzschicht (7) aus einer mittels UV-Strahlen ausgehärteten Acrylfarbe auf dem halbfertigen produkt umfasst.

## Revendications

1. Film décoratif comprenant un substrat en papier (1) sur lequel il est fixé, au moyen d'une couche adhésive (2), un produit semi-fini stratifié comprenant une couche de polyester (4) et une couche décorative (6), une couche de polyéthylène (3) étant agencée entre ladite couche adhésive (2) et ledit produit semi-fini stratifié fixé sur ledit substrat en papier (1), **caractérisé en ce que**, dans le produit semi-fini, la couche de polyester (4) est au-dessous de la couche décorative (6).

2. Film décoratif selon la revendication 1, **caractérisé en ce que** le produit semi-fini comprend en outre une couche métallique (5) qui est au-dessous de la couche décorative (6).

3. Film décoratif selon la revendication 2, **caractérisé en ce que** ladite couche métallique (5) est au-dessus de la couche de polyester (4).

4. Film décoratif selon l'une quelconque des revendications précédentes, **caractérisé en ce qu'**il comprend en outre une couche de protection finale (7) de peinture acrylique durcie par rayonnement UV.

5. Film décoratif selon l'une quelconque des revendications précédentes, **caractérisé en ce que** la couche de polyéthylène (3) a une épaisseur indicative de 20 µm.

6. Procédé pour fabriquer un film décoratif selon l'une quelconque des revendications précédentes, comprenant les étapes consistant à :
a) prévoir un produit semi-fini stratifié comprenant une couche de polyester (4) et une couche décorative (6) ;
b) prévoir un substrat en papier (1) fourni avec une couche adhésive (2) ;
c) prévoir une couche de polyéthylène (3) entre le substrat en papier (1) et le produit semi-fini avant leur couplage ;
d) coupler ledit produit semi-fini stratifié audit substrat en papier (1) par calandrage à chaud ;
**caractérisé en ce que**, à l'étape a), la couche de polyester (4) est agencée au-dessous de la couche décorative (6).

7. Procédé pour fabriquer un film décoratif selon la revendication 6, **caractérisé en ce que** l'étape a) comprend en outre l'étape consistant à prévoir une couche métallique (5) qui est agencée au-dessous de la couche décorative (6).

8. Procédé pour fabriquer un film décoratif selon la revendication 7, **caractérisé en ce que** ladite couche métallique (5) est agencée au-dessus de la couche de polyester (4).

9. Procédé pour fabriquer un film décoratif selon la revendication 8, **caractérisé en ce que** la couche métallique (5) est fournie par métallisation de la couche de polyester (4) dans une étape préliminaire qui précède l'étape a).

10. Procédé pour fabriquer un film décoratif selon l'une quelconque des revendications 6 à 9, **caractérisé en ce qu'**il comprend en outre une étape a') consistant à prévoir sur le produit semi-fini, une couche de protection finale (7) de peinture acrylique durcie par rayonnement UV.
